# EUROPEAN PATENT SPECIFICATION

(11) **EP 1 985 187 B1**
(45) Date of publication and mention of the grant of the patent: **02.12.2009**
(21) Application number: 08012757.4
(22) Date of filing: 05.04.2004
(51) Int. Cl.: A23B 7/152, A01F 25/00

(54) **Method for controlling sprout growth in a crop**
Verfahren zur Steuerung des Keimwachstums in einer Pflanze
Procédé de contrôle de la croissance de germe dans une récolte

(30) Priority: 05.04.2003 GB 0307897
(43) Date of publication of application: 29.10.2008
(62) Divisional of application: 04725729.0
(73) Proprietor: Restrain Company Limited, Doddington March Cambridgeshire PE15 0UW (GB)
(72) Inventor: Coleman, Paul, Michael, Cambridgeshire PE 13 5LW (GB); Bishop, David, James, East Sussex TN6 2RS (GB)
(74) Representative: Unwin, Stephen Geoffrey

(56) References cited:
- PATENT ABSTRACTS OF JAPAN vol. 1997, no. 05, 30 May 1997 (1997-05-30) & JP 09 023740 A (NORIN SUISANSYO HOKKAIDO NOGYO SHIKENJO), 28 January 1997 (1997-01-28)
- DATABASE WPI Week 199503 Thomson Scientific, London, GB; AN 1995-019137 XP002496600 & JP 06 305902 A (SANYO ELECTRIC CO LTD) 1 November 1994 (1994-11-01)
- PRANGE, R. K, ET AL: "Using Ethylene as a Sprout Control Agent in Stored 'Russet Burbank' Potatoes" JOURNAL OF THE AMERICAN SOCIETY FOR HORTICULTURAL RESEARCH, vol. 123, no. 3, 1998, pages 463-469, XP001202645

## Description

The present invention relates to a method for controlling sprout growth in a crop stored above ground after dormancy break by prolonging the natural storage period of the crop by inhibiting sprouting.

It is known to store crops of the aforementioned genera in above ground stores in controlled atmospheres where the level of ethylene and/or other gases are monitored. Ethylene concentration is commonly controlled to inhibit or induce ripening of produce.

Japanese unexamined patent publication 09273740A discloses a method and apparatus for controlling the ethylene concentration in a vegetable storage facility. The publication describes an ethylene gas generator, for example, an ethylene generating bacteria, with an associated regulator valve. At periodic intervals, a sample of the atmosphere in the storage facility is taken via an exhaust pipe. Release of the atmospheric gases is by means of a stopcock. The density of the sample is checked against a predetermined density which reflects an acceptable ratio of ethylene to air. The system suffers from a lack of accuracy and thus is not helpful in controlling ethylene concentration within a small range.

US patent 6105416 discloses an ethylene monitoring and control system. the system is provided with samples of potentially ethylene containing gas from a source, for example, the atmosphere of a fruit and vegetable store. The system comprises a test chamber into which the sample is received and a quantity of ozone is added. The ozone reacts with any ethylene in the sample so as to emit light. The quantity/frequency of the light detected from the reaction is taken as a measure of the proportion of ethylene present in the sample. A control computer responds to changes in the ethylene concentration of the tested samples to control ethylene levels in the tested environment by injection of additional ethylene gas into the tested environment or ventilation of the environment as appropriate. Whilst potentially very accurate at monitoring the ethylene concentration in samples taken, the system is expensive and potentially hazardous in its use of ozone gas.

A simple, inexpensive and safe system is required for the monitoring and controlling of ethylene concentrations in a food storage environment.

A number of methods for controlling sprout growth in a crop stored above ground exist. In one method, maleic hydrazide is applied to potato plant leaves in the field 3-7 weeks before the expected date of topkill or first frosts. In another method, chlorpropham (CIPC) is applied to stored potato tubers in the form of an aerosol after the tubers have suberized. CIPC is reapplied as required throughout the storage period. A further method is to burn out any sprouts by the application of hydrogen peroxide. It is also known to apply dimethylnaphthalate (DMN) to potato tubers in storage by aerosol application. The application is repeated as required throughout the storage period.

There is increasing consumer pressure for the food processing industry to reduce pesticide levels. Therefore it will be appreciated that one problem with the aforementioned methods is that they all involve the use of chemicals which may leave undesirable residues in the product. A further problem is that the application of such chemicals can be time consuming.

Proposed Regulatory Decision Document PRDD2001-04 discloses a method comprising applying ethylene at a concentration of up to 4 ppm to cultivar *Russet Burbank* potato tubers stored in a commercial potato store at a temperature of 9°C. The storage conditions are selected to minimise the development of sugars that are detrimental to the fry colour (lead to dark brown chips).

Onion bulbs are stored at 0.5°C from September to January. Storage from September to April is achieved under an atmosphere of low oxygen and high carbon dioxide concentrations. One disadvantage of this method Is that the equipment required to maintain such an atmosphere is expensive. Furthermore, personnel cannot enter these stores without breathing apparatus. For storage from September to June, maleic hydrazide is applied to the onlon plant leaves in a manner similar to that described for potato tubers.

### Summary of the Invention

The present invention aims to address the problems and disadvantages of existing methods previously discussed for controlling sprout growth In crops stored above ground.

The invention provides a method for controlling sprout growth In a crop stored above ground comprising the steps of:
A. storing a crop under an atmosphere of air at a temperature of less than 9°C for up to 4 months;
B. storing the crop under an atmosphere comprising ethylene at a concentration greater than 4 ppm at a temperature of less than 9°C for up to 12 months; and
C. removing the crop from storage under the said ethylene atmosphere for subsequent packaging, wherein the crop is an alllum spp, an apiaceae spp, a narcissi spp or a liliaceae spp.

Preferably, the method comprises the use of apparatus for controlling the ethylene concentration In a crop storage facility, the apparatus comprising an ethylene generator, an ethylene concentration sensor and an ethylene concentration controller, the ethylene concentration controller being configured, in use, to be responsive to a signal from the ethylene concentration sensor, which signal corresponds to the ethylene concentration In the facility at any given time, to Initiate the release of ethylene from the ethylene generator only when the signal Indicates that the ethylene concentration has fallen below a pre-selected minimum desirable ethylene concentration In the facility and responsive to the signal from the ethylene concentration sensor to arrest the release of ethylene from the ethylene generator when the signal corresponds to an ethylene concentration greater than or equal to a pre-selected maximum ethylene concentration In the facility, thereby to maintain the ethylene concentration within a range defined by the pre-selected minimum and maximum desirable ethylene concentrations and wherein the ethylene generator comprises a source of ethylene precursor and a catalyst for catalysing the production of ethylene from the ethylene precursor, the ethylene controller being responsive to a signal from the ethylene concentration sensor to initiate or inhibit interaction between the catalyst and the ethylene precursor.

Desirably the pre-selected minimum ethylene concentration Is 5 ppm and preferably 8 ppm.

Desirably the pre-selected maximum ethylene concentration is 30 ppm and preferably 13 ppm. In pre-selectlng a maximum ethylene concentration, the release of ethylene can be optimised to prolong the natural storage period of a crop without needlessly wasting ethylene.

The sensor may take any conventional form, for example (but not strictly limited to; infra-red, electro-lumlnescent, chromatographic or catalytic bead.

The ethylene concentration sensor may be an electrochemical sensor, although other forms of ethylene concentration sensor may be used. The sensor is robust, accurate, sensitive and cost effective.

Optionally, the catalytic ethylene generator comprises a catalyst which, In use, converts a feedstock of ethanol to ethylene (i.e., the ethylene precursor is ethanol). Storage and refilling of this feedstock Is less tiresome and considered safer than use of compressed ethylene gas in a cylinder.

The catalytic ethylene generator may comprise a catalyst heater, a catalyst temperature controller and a catalyst temperature sensor, the catalyst temperature controller operating the catalyst heater and being configured to be responsive to a signal from the catalyst temperature sensor, which signal corresponds to the catalyst temperature at any given time, to switch on the catalyst heater when the signal Indicates that the catalyst temperature has fallen below a pre-selected desirable catalyst temperature thereby to maintain the catalyst temperature above the pre-selected desirable catalyst temperature. The ethylene concentration controller may include the catalyst temperature controller. Optionally, the ethylene temperature controller may be responsive to a signal from the ethylene concentration sensor to initiate or Inhibit heating of the catalyst, thereby to alter the rate at which ethylene is being Introduced into the storage facility.

Optionally, the catalytic ethylene generator further comprises a valve for controlling the release of ethylene precursor to the catalyst, the valve being operated by the ethylene concentration controller, the ethylene concentration controller being configured to open the valve to release ethylene precursor to the catalyst only after the catalyst temperature sensor indicates to the catalyst temperature controller that the catalyst temperature is at or above a pre-selected minimum catalyst temperature.

Alternatively, the catalytic ethylene generator can further comprise a valve for controlling the release of ethylene precursor to the catalyst, the valve being operated by the catalyst temperature controller, the catalyst temperature controller being configured, in use, to be responsive to a signal from the catalyst temperature sensor, which signal corresponds to the catalyst temperature at any given time, to open the valve to release generator feedstock to the catalyst when the signal corresponds to a catalyst temperature at or above a pre-selected minimum desirable catalyst temperature. Pre-heating the catalyst optimises conversion of ethylene precursor by the catalyst.

A metering system may be provided for metering the supply of ethylene precursor to the catalyst. The metering system may, optionally, comprise an injection chamber equipped with a capacity sensor, the injection chamber being in communication with a supply of the precursor via a first valve which first valve is responsive to the output of the capacity sensor to close when a predetermined capacity is reached, and in communication with a catalyst chamber via a second valve, the first and second valve being operable independently of each other. Optionally, the capacity sensor is an optical level sensor.

Desirably, the first and second valves comprise solenoid valves powered through a single changeover relay circuit such that, at any given time, only one of the valves can be opened.

Operation of the valves is desirably controlled by the ethylene concentration controller, the controller being configured to open the second valve in a series of pulses whereby to gradually empty the injection chamber into the catalyst chamber. The frequency and/or period of the pulses can, optionally, be adjustable, thus the controller can be programmed to release precursor to the catalyst chamber at a predetermined rate selected to result in maintenance of a desired ethylene concentration in the crop storage facility. Conveniently, the frequency and/or period of the pulses can be actively adjusted in response to the signal from the ethylene concentration sensor. For example, if the sensor detects a quantifiable drop in the ethylene concentration, the frequency and/or period may be increased by a proportional amount whereby to increase the rate of ethylene production sufficient to return the concentration to a desired optimum level, without significantly overshooting that level.

Where a catalyst heater is included in the generator, the heater may, optionally, comprise a heating element embedded in the catalyst so as to heat the catalyst from within. In another option, the catalyst heater may be associated with heat conductive walls of a catalyst chamber containing the catalyst.

In conventional designs of catalytic ethylene generator, the catalyst has been heated with an electrical heater element (immersion heater style) embedded within the bulk of the catalyst. Typically, the catalyst material is an excellent heat insulator and consequently, this heating method can result in large temperature gradients with only a small portion of the total catalyst being at the optimum temperature for catalysis. In one optional embodiment of the invention, therefore, the ethylene generator is provided with a tubular catalyst chamber for containing the catalyst the walls of which are constructed from material of high thermal capacity. Heaters are provided externally of the chamber giving thermal gradients within the chamber of less than 10 degrees Celsius, significantly less than the gradients exhibited in the prior art arrangement. This more uniform temperature of the catalyst results in a much greater efficiency in the conversion of precursor to ethylene and a significant reduction in undesirable side reactions which can contaminate the ethylene and reduce the catalyst life.

The method for controlling the ethylene concentration in a crop storage facility optionally comprises the additional step of arresting release of ethylene into the crop storage facility when the ethylene concentration climbs beyond a pre-selected maximum desirable ethylene concentration.

In a preferred arrangement a computer program is run on a computer to cause the computer to perform the above-mentioned method.

Optionally the method for controlling sprout growth crop additionally comprises the step of de-gassing the crop after removal from storage under the ethylene atmosphere and prior to packaging.

The method for controlling sprout growth crop may additionally include a step of packaging the crop, the step of packaging comprising bagging the crop under a vacuum or an atmosphere comprising either oxygen at a concentration In the range 3-10% v/v and carbon dioxide at a concentration in the range 1-6% v/v, or oxygen at a concentration In greater than or equal to 80% v/v thereby to prolong the natural storage period of the crop.

The temperatures of steps `A.' and/or 'B' are desirably In the range 0-8°C. For Allium spp. Including onlons, the temperature is desirably about 0°C.

The ethylene concentration is desirably In the range 5-30 ppm, preferably In the range 7-15 ppm, more preferably In the range 9-11 ppm, optimally 10 ppm.

The crop can be stored under an atmosphere of air for 3 months or less, but more preferably for 2 months or less.

The crop can be stored under an atmosphere comprising ethylene for 10 months or less, desirably 8 months or less, optionally 6 months or less or optionally 4 months or less.

Specific examples of the genera; allium spp., aplaceae spp., narcissis spp. and Illiacae spp., include but are not strictly limited to: onion bulbs, garlic, carrots, parsnips, leeks, scallions, bean sprouts, flower bulbs (e.g. daffodil, lily, tuip).

### Brief Description of the Figures

The invention will now be exemplified with reference to the accompanying Figures in which;
Figure 1 shows a block diagram of an apparatus for controlling the atmospheric ethylene concentration in a crop storage facility for use in a preferred method of the invention.
Figure 2 shows in more detail one embodiment of a catalytic ethylene generator for use in a preferred method of the invention.

### Detailed Description of the Invention

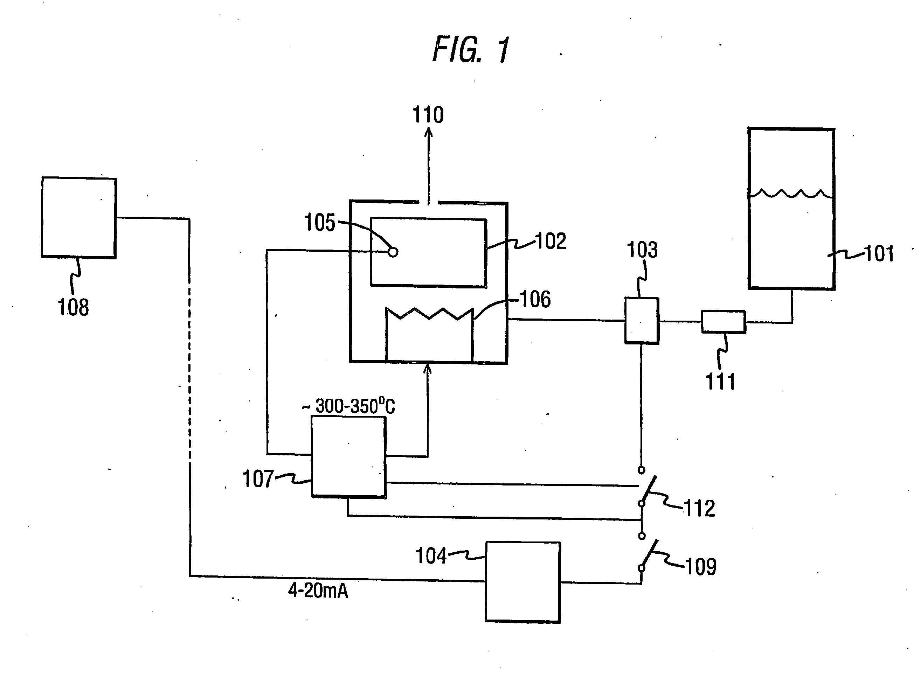

Figure 1 illustrates a catalytic ethylene generator. In operation of the generator, ethanol (101) is metered under gravity to a catalyst (102), comprising alumina silicate pellets, via a restrictor (111) and/or a solenoid valve (103). The catalyst (102) converts ethanol to ethylene whereupon it is vented to the atmosphere (110). The solenoid valve (103) is controlled by an ethylene concentration controller (104) via a three-way switch (109).

The switch (109) connects the ethylene concentration controller (104) to a catalyst temperature controller (107) and the solenoid valve (103), the latter only through a low temperature switch (112). The catalyst temperature controller (107) is only operable when the switch (109) is closed.

The catalyst temperature controller (107) operates a catalyst heater (106), comprising a resistance wire, which heats the catalyst (102) to the required operating temperature of approximately 300-350°C. The catalyst temperature controller (107) monitors a signal from a catalyst temperature sensor (105), which corresponds to the catalyst temperature, against the required operating temperature, the latter being preprogrammed into the catalyst temperature controller (107). If the catalyst temperature falls below the required operating temperature, the catalyst temperature controller (107) switches on the catalyst heater (106). If the catalyst temperature rises above the required operating temperature, the catalyst temperature controller (107) switches off the catalyst heater (106).

The low temperature switch (112) remains in an open position when the catalyst temperature is below a minimum catalyst temperature programmed into the catalyst temperature controller (107). This minimum catalyst temperature is about 25°C below the required catalyst operating temperature.

An ethylene concentration sensor (108) (Type ICA512 R from International Controlled Atmospheres Limited), comprising an electrochemical sensor and conditioning circuits, is in communication with the ethylene concentration controller (104) providing a 4-20 mA signal corresponding to the ethylene concentration in the locality of the ethylene concentration sensor (108). The ethylene concentration sensor (108) is located, often remote from the apparatus, within the crop store where a representative ethylene concentration can be measured.

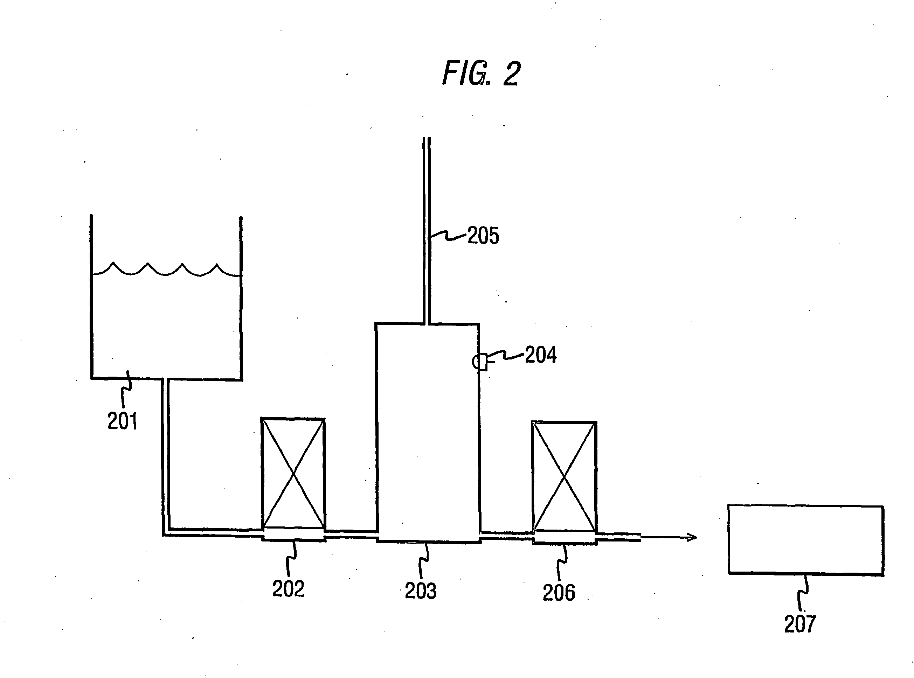

Figure 2 shows tank 201 in which is provided a source of ethylene precursor, for example ethanol. The tank typically has a capacity of about 20L. A solenoid valve 202 controls flow of the precursor from the tank 201 to an injection chamber 203 via a conduit which connects the tank with the bottom of the injection chamber 203. The injection chamber 203 is provided with a vent 205 at its top end and a second conduit which leads to a catalyst chamber 207. Flow of ethanol in the second conduit is controlled by a second solenoid valve 206. The injection chamber 203 includes an optical level sensor 204.

When it is desired to introduce ethylene into a storage facility, the solenoid valve 202 is opened and precursor flows through the first conduit and into injection chamber 203. Air in the injection chamber is vented through vent 205 and replaced by ethanol. Once the ethanol level exceeds the level of the sensor 204, the controller responds to the output of the level sensor 204 to close solenoid valve 202.

Subsequently, the second solenoid valve 206 is caused to pulse for a series of short pulses sufficient to empty the injection chamber 203. The contents of the injection chamber 203 discharges with the aid of gravity and is received in the catalyst chamber 207. The period and/or frequency of pulses of solenoid 206 can be adapted to meter predetermined quantities of precursor to the catalyst chamber 207 thereby controlling the rate of production and delivery of ethylene to the storage facility. Thus the ethylene concentration in the storage environment can be maintained within a close tolerance of a desired concentration. The desired concentration may be programmable into the controller and may vary depending on the specific requirements of the genus of crop in storage.

Once a series of pulses of the second solenoid valve 206 is complete, that valve closes and the first solenoid valve 202 is re-opened so as to refill the injection chamber 203. The controller can monitor usage of the precursor by counting the number of delivery cycles to the injection chamber, multiplying this by the capacity measured by the level sensor 204 and deducting this from a known capacity of precursor provided in the tank 301. When the quantity of precursor remaining falls below a predetermined minimum (for example, when only sufficient remains for 24 hours of operation at the current setting) an alarm can be triggered to alert a system supervisor of a need to provide more precursor.

The solenoids valves 202 and 206 are powered by a single change over relay contact so that only one of the valves can be open at any given time. This is an important safety feature of the machine as it prevents flooding of the catalyst with precursor.

The solenoid 202, chamber 203, solenoid 206 and the level sensor 204 are integrated into a single compact assembly together with a controlling electronic circuit that provides the timing, logic and safety functions for the metering module described above.

The electronic circuit is used to control the frequency an/or period of operation of solenoid 206. The frequency and/or period of operation of this valve 206 controls the rate of ethanol flow to the catalytic converter in the catalyst chamber 207. This flow rate can be set over the range 0 to a maximum (typically 4 litres/day). The frequency is adjustable by adjustment of an input voltage provided to the circuit. (Typically varying from 0 to 8 v).

The input voltage for the metering module is provided by the ethylene concentration controller 104 and this can operate in one of three distinct modes.

### Mode 1

When the ethylene concentration measured by the sensor 108 is below a predetermined minimum value, the catalyst heater is turned ON. When the heater has reached the optimum temperature for catalysis of the precursor, (under the control of the catalyst temperature controller), power is supplied to the previously described ethanol metering module which meters ethanol at a maximum output rate into the heated catalyst chamber. This continues until the ethylene in the room measured by the sensor (108) reaches the pre-selected maximum ethylene concentration desired for the facility. When this concentration is reached, the flow of ethanol is stopped and the power to the catalyst temperature controller is cut. The mode is cyclic, when the ethylene concentration falls below the minimum, the cycle restarts.

### Mode 2

When power is supplied to the ethylene generator, the heaters are maintained ON and controlled at the optimum temperature for catalysis. The precursor can be metered as follows provided the temperature of the catalyst chamber remains within preset limits.

The metered output rate of the precursor can be set on the ethylene concentration controller to be at a fixed rate to suit the storage facility whose environment is to be controlled. This can be anywhere between 0 and the maximum output. When the ethylene concentration in the storage facility falls below the pre-selected minimum, the precursor is metered into the catalyst at the preset rate. When the ethylene concentration exceeds the pre-selected maximum ethylene concentration, the metering is stopped until the ethylene concentration falls below the pre-selected minimum concentration, at which time the sequence is repeated.

### Mode 3

When power is supplied to the machine the catalyst heater is maintained on and controlled at the optimum temperature for catalysis. The precursor can be metered as follows provided the temperature of the catalyst chamber remains within preset limits (for example by the catalyst temperature controller).

The ethylene controller 104 in this mode is a proportional controller so that the voltage output to the rate of delivery of precursor to the catalyst provided by the metering module becomes proportional to the error between the measured ethylene concentration in the storage facility and a pre-selected optimum concentration. The voltage input to the metering module controls the flow rate of the precursor and its rate of delivery to the catalyst chamber, thus providing a substantially continuous rate of ethylene production to meet the specific requirements of the facility. This mode offers both an offset and an integral function to provide accurate control of the ethylene concentration in the facility.

Operation of the apparatus exemplified in Figure 1 after installation in a store for above ground storage of crops is set out below.

The ethylene generator is loaded with ethanol and activated together with the apparatus. The ethylene concentration controller (104) is programmed with desired minimum and maximum ethylene concentrations.

The ethylene concentration sensor (108) measures the ethylene concentration within the store and transmits a signal corresponding to that ethylene concentration to the ethylene concentration controller (104). The ethylene concentration controller (104) monitors the signal from the ethylene concentration sensor (108) and checks if the signal falls outside the pre-defined minimum and maximum ethylene concentrations. When the signal from the ethylene concentration sensor (108) indicates that the ethylene concentration in the store has fallen below the pre-defined minimum ethylene concentration, the following sequence of events occurs.

The ethylene concentration controller (104) closes the switch (109) to complete a circuit between the ethylene concentration controller (104) and the catalyst temperature controller (107). The catalyst temperature controller (107) is hence activated by the ethylene concentration controller (104) and operates the catalyst heater (106) thereby heating the catalyst to the required operating temperature. Operation of the catalyst heater (106) has been described herein above.

When the catalyst temperature has increased above the programmed minimum catalyst temperature, the catalyst temperature controller (107) closes the low temperature switch (112) thereby permitting the ethylene concentration controller (104) to energise and open the solenoid valve (103) allowing the ethanol (101) to flow into the heated catalyst (102) whereupon it is converted to ethylene.

When the signal from the ethylene concentration sensor (108) indicates that the ethylene concentration in the storage room has risen above the pre-defined maximum ethylene concentration, the ethylene concentration controller (104) opens the switch (109) which de-energises the solenoid valve (103) and deactivates the catalyst temperature controller (107). The flow of the ethanol (101) ceases and the catalyst (102) cools down.

## Claims

1. A method for controlling sprout growth in a crop stored above ground comprising the steps of:
A. storing a crop under an atmosphere of air at a temperature of less than 9°C for up to 4 months;
B. storing the crop under an atmosphere comprising ethylene at a concentration greater than 4 ppm at a temperature of less than 9°C for up to 12 months; and
C. removing the crop from storage under the said ethylene atmosphere for subsequent packaging, wherein the crop is an allium spp, an apiaceae spp, a narcissi spp or a liliaceae spp.

2. A method for controlling sprout growth in a crop stored above ground according to claim 1 comprising the additional step of de-gassing the crop after removal from storage under the ethylene atmosphere and prior to packaging.

3. A method for controlling sprout growth in a crop stored above ground according to claim 1 or claim 2 additionally including a step of packaging the crop, the step of packaging comprising bagging the crop under a vacuum or an atmosphere comprising either oxygen at a concentration in the range 3-10% v/v and carbon dioxide at a concentration in the range 1-6% v/v, or oxygen at a concentration greater than or equal to 80% v/v thereby to prolong the natural storage period of the crop.

4. A method for controlling sprout growth in a crop stored above ground according to any one of claims 1-3 wherein the temperatures of steps 'A' and/or 'B' are in the range 0-8°C.

5. A method for controlling sprout growth in a crop stored above ground according to claim 4 wherein the temperatures are in the range 2-6°C.

6. A method for controlling sprout growth in a crop stored above ground according to claim 5 wherein the temperatures are in the range 3-5°C.

7. A method for controlling sprout growth in a crop stored above ground according to claim 6 wherein the temperatures are 3.5°C.

8. A method for controlling sprout growth in a crop stored above ground according to any one of claims 1-7 wherein the ethylene concentration is in the range 5-20 ppm.

9. A method for controlling sprout growth in a crop stored above ground according to claim 8 wherein the ethylene concentration is in the range 7-15 ppm.

10. A method for controlling sprout growth in a crop stored above ground according to claim 9 wherein the ethylene concentration is in the range 9-11 ppm.

11. A method for controlling sprout growth in a crop stored above ground according to claim 10 wherein the ethylene concentration is 10 ppm.

12. A method for controlling sprout growth in a crop stored above ground according to any one of claims 1-11 wherein the crop is stored under an atmosphere of air for 3 months or less or 2 months or less.

13. A method for controlling sprout growth in a crop stored above ground according to any one of claims 1-12 wherein the crop is stored under an atmosphere comprising ethylene for 10 months or less, 8 months or less, 6 months or less or 4 months or less.

14. A method for controlling sprout growth in a crop stored above ground according to any one of claims 1-13 wherein the crop comprises onion bulbs.

## Patentansprüche

1. Ein Verfahren zur Steuerung des Keimwachstums in einer oberirdisch gelagerten Pflanze, das die folgenden Schritte umfasst:
A. Lagerung einer Pflanze unter Luftatmosphäre bei einer Temperatur von weniger als 9 °C für einen Zeitraum von bis zu 4 Monaten;
B. Lagerung der Pflanze unter einer Atmosphäre, welche Ethylen mit einer Konzentration von mehr als 4 ppm beinhaltet bei einer Temperatur von weniger als 9 °C für einen Zeitraum von bis zu 4 Monaten; und
C. Entfernung der Pflanze aus der Lagerung unter der besagten EthylenAtmosphäre zur nachfolgenden Verpackung, wobei es sich bei der Pflanze um Allium ssp, Apiaceae ssp, Narcissi ssp oder Liliaceae ssp handelt.

2. Ein Verfahren zur Steuerung des Keimwachstums in einer oberirdisch gelagerten Pflanze gemäß Anspruch 1, welches den zusätzlichen Schritt umfasst, die Pflanze zu entgasen, bevor sie aus dem Lager unter der Ethylenatmosphäre und vor der Verpackung entfernt wird.

3. Ein Verfahren zur Steuerung des Keimwachstums in einer oberirdisch gelagerten Pflanze gemäß Anspruch 1 oder Anspruch 2, welches zusätzlich einen Schritt zur Verpackung der Pflanze beinhaltet, wobei der Schritt der Verpackung das Einsacken der Pflanze unter einem Vakuum oder einer Atmosphäre umfasst, die entweder Sauerstoff mit einer Konzentration in dem Bereich von 3 - 10 % V/V und Kohlendioxid mit einer Konzentration in dem Bereich von 1 - 6 % V/V oder Sauerstoff mit einer Konzentration beinhaltet, die größer oder gleich 80 % V/V ist, um somit die natürliche Lagerzeit der Pflanze zu verlängern.

4. Ein Verfahren zur Steuerung des Keimwachstums in einer oberirdisch gelagerten Pflanze gemäß den Ansprüchen 1 - 3, wobei die Temperaturen der Schritte 'A' und / oder 'B' im Bereich von 0 - 8 °C liegen.

5. Ein Verfahren zur Steuerung des Keimwachstums in einer oberirdisch gelagerten Pflanze gemäß Anspruch 4, wobei die Temperaturen im Bereich von 2 - 6 °C liegen.

6. Ein Verfahren zur Steuerung des Keimwachstums in einer oberirdisch gelagerten Pflanze gemäß Anspruch 5, wobei die Temperaturen im Bereich von 3 - 5 °C liegen.

7. Ein Verfahren zur Steuerung des Keimwachstums in einer oberirdisch gelagerten Pflanze gemäß Anspruch 6, wobei die Temperaturen bei 3,5 °C liegen.

8. Ein Verfahren zur Steuerung des Keimwachstums in einer oberirdisch gelagerten Pflanze gemäß einem der Ansprüche von 1 - 7, wobei die Ethylenkonzentration im Bereich von 5 - 20 ppm liegt.

9. Ein Verfahren zur Steuerung des Keimwachstums in einer oberirdisch gelagerten Pflanze gemäß Anspruch 8, wobei die Ethylenkonzentration im Bereich von 7 - 15 ppm liegt.

10. Ein Verfahren zur Steuerung des Keimwachstums in einer oberirdisch gelagerten Pflanze gemäß Anspruch 9, wobei die Ethylenkonzentration im Bereich von 9 - 11 ppm liegt.

11. Ein Verfahren zur Steuerung des Keimwachstums in einer oberirdisch gelagerten Pflanze gemäß Anspruch 10, wobei die Ethylenkonzentration bei 10 ppm liegt.

12. Ein Verfahren zur Steuerung des Keimwachstums in einer oberirdisch gelagerten Pflanze gemäß einem der Ansprüche von 1 - 11, wobei die Pflanze unter Luftatmosphäre 3 Monate lang oder kürzer oder 2 Monate lang oder kürzer gelagert wird.

13. Ein Verfahren zur Steuerung des Keimwachstums in einer oberirdisch gelagerten Pflanze gemäß einem der Ansprüche von 1 - 12, wobei die Pflanze 10 Monate lang oder kürzer, 8 Monate lang oder kürzer, 6 Monate lang oder kürzer oder 4 Monate oder kürzer unter einer Atmosphäre gelagert wird, die Ethylen beinhaltet.

14. Ein Verfahren zur Steuerung des Keimwachstums in einer oberirdisch gelagerten Pflanze gemäß einem der Ansprüche von 1-13, wobei die Pflanze Thailand-Hakenlilien beinhaltet.

## Revendications

1. Une méthode d'inhibition de la germination dans une culture conservée en surface, comprenant
A. le stockage d'une culture dans une atmosphère d'air à une température inférieure à 9°C, pendant une période maximale de 4 mois ;
B. le stockage de la culture dans une atmosphère comprenant de l'éthylène à une concentration supérieure à 4 ppm, à une température inférieure à 9°C, pendant une période maximale de 12 mois ; et
C. l'enlèvement de la culture de son lieu de stockage sous ladite atmosphère d'éthylène pour être ensuite emballée, cette culture étant une des suivantes : un allium spp, un apiaceae spp, un narcissi spp, ou un liliaceae spp.

2. Une méthode d'inhibition de la germination dans une culture conservée en surface conforme à la revendication 1, comprenant en outre le dégazage de la culture après son enlèvement du lieu de stockage sous atmosphère d'éthylène, et préalablement à l'emballage.

3. Une méthode d'inhibition de la germination dans une culture conservée en surface conforme à la revendication 1 ou la revendication 2, comprenant en outre l'emballage de la culture, cette opération comprenant la mise en sac de la culture sous vide ou dans une atmosphère comprenant soit de l'oxygène dans une concentration comprise dans la plage 3 à 10% v/v et du dioxyde de carbone dans une concentration comprise dans la plage 1 à 6% v/v, ou encore de l'oxygène avec un taux de concentration supérieur ou égal à 80% v/v, en prolongeant de cette façon la période de stockage naturelle de la culture.

4. Une méthode d'inhibition de la germination dans une culture conservée en surface conforme aux revendications 1 à 3, dans laquelle les températures des opérations « A » et/ou « B » sont comprises dans la plage 0 à 8°C.

5. Une méthode d'inhibition de la germination dans une culture conservée en surface conforme à la revendication 4, dans laquelle les températures sont comprises dans la plage 2 à 6°C.

6. Une méthode d'inhibition de la germination dans une culture conservée en surface conforme à la revendication 5, dans laquelle les températures sont comprises dans la plage 3 à 5°C.

7. Une méthode d'inhibition de la germination dans une culture conservée en surface conforme à la revendication 6, dans laquelle les températures sont égales à 3,5°C.

8. Une méthode d'inhibition de la germination dans une culture conservée en surface conforme à une quelconque des revendications 1 à 7, dans laquelle la concentration d'éthylène est comprise dans la plage 5 à 20 ppm.

9. Une méthode d'inhibition de la germination dans une culture conservée en surface conforme à la revendication 8, dans laquelle la concentration d'éthylène est comprise dans la plage 7 à 15 ppm.

10. Une méthode d'inhibition de la germination dans une culture conservée en surface conforme à la revendication 9, dans laquelle la concentration d'éthylène est comprise dans la plage 9-11 ppm.

11. Une méthode d'inhibition de la germination dans une culture conservée en surface conforme à la revendication 10, dans laquelle la concentration d'éthylène est égale à 10 ppm.

12. Une méthode d'inhibition de la germination dans une culture conservée en surface conforme à une quelconque des revendications 1 à 11, dans laquelle la culture est conservée sous une atmosphère d'air pendant 3 mois ou moins, ou 2 mois ou moins.

13. Une méthode d'inhibition de la germination dans une culture conservée en surface conforme à une quelconque des revendications 1 à 12, dans laquelle la culture est conservée sous une atmosphère contenant de l'éthylène pendant 10 mois ou moins, 8 mois ou moins, 6 mois ou moins, ou 4 mois ou moins.

14. Une méthode d'inhibition de la germination dans une culture conservée en surface conforme à une quelconque des revendications 1 à 13, dans laquelle la culture comprend des bulbes d'oignons.
